# EUROPEAN PATENT APPLICATION

(11) **EP 1 079 201 A2**
(43) Date of publication of application: **28.02.2001**
(21) Application number: 00306592.7
(22) Date of filing: 02.08.2000
(51) Int. Cl.: G01B 1/00, G01B 5/012

(54) **Stylus tip for contact probe**

(30) Priority: 25.08.1999 GB 9920029
(71) Applicant: Renishaw plc, Wotton-Under-Edge Gloucestershire GL12 8JR (GB)
(72) Inventor: McMurtry, David Roberts, Gloucestershire GL12 7EF (GB); McFarland, Geoff, Dursley, Gloucestershire GL11 5PG (GB)
(74) Representative: Jackson, John Timothy

(57) **Abstract**

There is disclosed a stylus tip 16 having one or more coating layers 28,30 of material on a substrate 20. The materials of the layer(s) are chosen to provide a colour distinction between the layer 28 and the substrate 20, or between the layers 28 and 30. The colour distinction will become apparent to a user when wear takes place on the stylus tip because the distinguishable colour of the underlying substrate or layer will show through. The coating layer 30 may be wear resistant.

## Description

The invention relates to probes for measuring workpieces, of the type having a stylus, the tip of which contacts the workpiece. Such probes are commonly used on coordinate positioning machines (cartesian or non-cartesian) such as coordinate measuring machines, machine tools, scanning machines, etc.

Such probes are known from, for example, US Patents Nos. 4,153,998, 5,088,208 and 5,345,689. They comprise a stylus which is deflectable relative to a probe body. The stylus has a tip, usually spherical, which is brought into contact with the surface of the workpiece to be measured, by relative movement between the probe body and the workpiece. Some probes generate a trigger signal upon such contact, and the trigger signal causes the coordinate positioning machine in which the probe is mounted to take a reading of position coordinates corresponding to the point of contact. Other such probes contain transducers which measure the amount of stylus deflection. It is then possible for the machine to move the probe so as to scan the stylus tip continuously over the workpiece surface, in order to obtain many coordinate data points describing the contour of the surface (a process sometimes called "digitising").

In time, the stylus tip can become worn, especially where it is used to scan continuously across workpiece surfaces. The resulting changed shape of the tip, e.g. becoming non-spherical in the case of a spherical tip, is a potential source for errors of measurement.

One aspect of the present invention provides a stylus tip comprising a substrate, and characterised by a first layer on the substrate, the first layer having a colour which is visually distinguishable from the colour of the substrate.

Thus, as the stylus tip wears in use, the layer will wear off in places and the contrasting colour of the substrate will show through. This gives a visible indication of the fact that the stylus tip is worn and should be replaced.

In one preferred embodiment, there is provided a further layer on the first layer, the further layer being more wear resistant than the first layer.

According to a second aspect of the invention there is provided a stylus tip for a measurement contact probe comprising a substrate characterised by having a layer formed thereon, the layer having inner and outer portions, the colour of the inner portion being visually distinguishable from the colour of the outer portion.

Other aspects of the invention provide styli and probes incorporating such tips, and methods for their manufacture.

Preferred embodiments of the invention will now be described by way of example, with reference to the accompanying drawings, wherein:
Fig 1 is a side view of a contact sensing probe;
Fig 2 is an enlarged sectional view of part of a stylus of the probe of Fig 1; and
Fig 3 is a sectional view corresponding to Fig 2, but of an alternative embodiment.

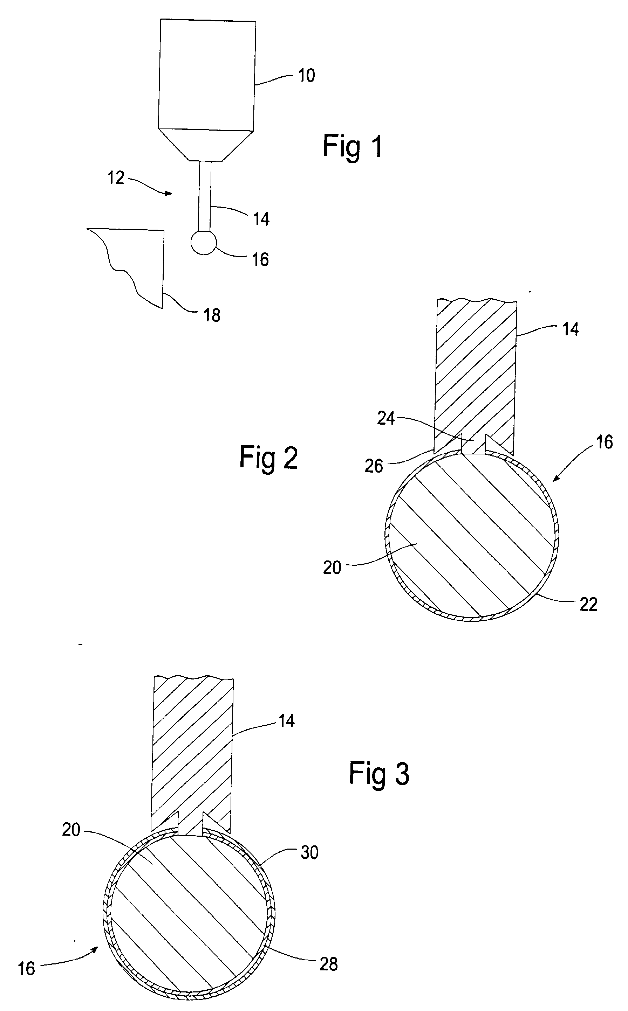

Referring to Fig 1, the probe comprises a body 10 and a stylus 12 having a stem 14 and a spherical tip 16. The stylus 12 is deflectable relative to the probe body 10 upon contact of the tip 16 with a workpiece 18. The probe body 10 contains a suitable mechanism to permit this deflection. It also contains a sensing mechanism to detect the contact with the workpiece 18 and/or to measure the amount of the deflection of the stylus 12.

As seen in Fig 2, the stylus tip 16 comprises a spherical substrate 20, coated with a thin coating layer 22. The coating 22 has a different colour to the substrate 20, and its thickness may for example be about one or a few µm, or even less (as low as 20nm or 30nm if desired). In one example, the substrate 20 is steel, while the coating 22 is a 1µm layer of diamond-like carbon, deposited on the substrate by any suitable technique, e.g. sputtering or physical vapour deposition.

Diamond-like carbon is a hard-wearing and low-friction material, and is therefore ideal for the surface of the sensing tip 16 of a scanning probe. It is black in colour, so when eventually the thin layer wears through, it contrasts with the colour of the steel substrate 20, to give a clear visual indication of the wear.

The thickness of the outer coating 22 is chosen in accordance with the permissible wear before the stylus should be replaced. For example, if a greater degree of non-sphericity (and therefore greater wear) can be tolerated, then a thicker coating 22 is used. However, a thin coating is preferred because it is less likely to produce sphericity errors when it is applied to an otherwise spherical substrate 20.

A suitable material for the stylus stem 14 is steel. The stylus tip 16 can be bonded to the stem 14 in any suitable way, such as by welding, e.g. resistance welding or friction welding. For this purpose, the end of the stem 14 has a central spigot 24, to which the tip 16 is welded. The spigot 24 may be surrounded by a depending lip 26 which almost touches the surface of the stylus tip 16, so that the spigot 24 is contained within a recess in the end of the stem 14.

The coating 22 can be deposited onto the substrate 20 after the stylus tip has been welded to the stem 14. This will result in some of the coating material being deposited on the stem, which is not disadvantageous.

Other possible materials for the substrate 20 include ceramics such as Al₂O₃.

Fig 3 shows an alternative embodiment. Here, a substrate 20 of a stylus tip 16 is coated with two layers of different materials 28,30. The outer layer 30 may be diamond, deposited by chemical vapour deposition. This again is an ideal hard-wearing material for the stylus tip of a scanning probe (harder than diamond-like carbon). A diamond coating produced in this way can be less than 1µm thick, if desired. Alternatively, plasma deposition may be used to form a diamond coating. Other thin layers of material may be used.

However, diamond is transparent, as are very thin layers of many other materials and these cannot directly provide a colour contrast as with the coating layer 22 in Fig 2. Therefore, it is provided over an inner coating layer 28 of a softer material such as aluminium or gold, and the substrate 20 is made of a material having a contrasting colour to the aluminium or gold.

A suitable material for the substrate is silicon nitride. This material can be lapped to a precisely spherical shape, and its black colour contrasts well with that of aluminium or gold. The two colours are therefore visually distinguishable. Other ceramics may be used, such as Al₂O₃.

The thickness of the coating layer 30 may be chosen in accordance with the degree of non-sphericity which can be tolerated, as in Fig 2. The thickness of the inner coating layer 28 should desirably be as thin as possible, so that once the outer layer 30 has worn through, the inner layer will wear through quickly so as to give the visual contrast against the substrate 20. Of course, such quick wear is also helped by the fact that the inner layer is a softer material.

Describing the embodiment shown in Fig 3 in another way, layers 28 and 30 can be considered as a single "layer" having inner and outer portions 28 and 30 respectively. The colour contrast need not be between the substrate 20 and the inner portion 28. There may be alternatively or additionally a visual distinction between the colours of the inner and outer portions 28 and 30.

In such an alternative construction an aluminium layer 28/30 may be formed on the substrate 20 having an inner portion 28 and an outer portion 30 formed by anodising the aluminium layer in any desired colour. The colour distinction is now between the portions 28 and 30, so the overall thickness of the aluminium is less important.

Neither does it matter whether there is a colour contrast between the aluminium and the substrate 20. A substrate such as steel or ceramic is used because a solid aluminium ball is difficult to make into a precisely spherical shape.

The tip 16 in Fig 3 may be bonded to the stem 14 in a similar manner to that described with respect to Fig 2.

Other possible materials for the outer coating 30 include silicon carbide, tungsten carbide, tetra-carbon and Al₂O₃.TiC (in both Fig 2 and Fig 3).

It can be desirable to select materials with similar coefficients of thermal expansion for the substrate 20 and for the outer coating 22 or 30, so as to ensure the integrity of the stylus tip when subjected to thermal stresses. The low coefficients of ceramic/non-metallic materials are advantageous.

Spherical tips have been shown in Figs 2 and 3, but other shapes may also be used.

Whilst the word "coating" has been used in the description, other means of forming the layers defined by the claims are envisaged, e.g. chemical alteration of the surface of a material to form a layer, e.g. a steel substrate might be used, which is subjected to partial hardening (to give an "inner portion") and is then partially tempered (to give an "outer portion"). Oxides on the steel's surface will provide a distinctive colour between the outer portion and the inner portion. However, there are no discrete layers of different materials, but instead, layers of the same material having distinct properties.

Whilst the figures show distinct boundaries to the layers, as the example above illustrates, these are not essential to the invention. A gradual transition between the properties and/or materials of the layer(s) is possible. This is particularly so when the layer(s) is(are) formed by chemical treatment or where the materials mix at a layer boundary.

## Claims

1. A stylus tip for a measurement contact probe comprising a substrate (20), and characterised by a first layer (22/28) on the substrate, the first layer having a colour which is visually distinguishable from the colour of the substrate.

2. A stylus tip as claimed in claim 1 having a further layer (30) on the first layer, the further layer being more wear resistant than the first layer.

3. A stylus tip as claimed in claim 1 or claim 2 wherein the substrate is formed from either a metal or a ceramic material.

4. A stylus tip as claimed in claim 3 wherein, where the substrate is metal, the metal is steel, or, where the substrate is a ceramic material, the material contains silicon nitride and/or an aluminium oxide.

5. A stylus tip as claimed in any one of the preceding claims wherein the first layer or the further layer is one of diamond, diamond-like-carbon, silicon carbide, Al₂O₃.TiC, tungsten carbide or tetra-carbon.

6. A stylus tip as claimed in claim 2, or 3 or 4 when appended to claim 2 wherein the first layer is either aluminium or gold and the further layer is diamond.

7. A stylus tip as claimed in claim 6 wherein the diamond layer is deposited on the first layer by sputtering or vapour deposition.

8. A stylus tip as claimed in any one of the preceding claims wherein the first and/or further layer(s) have a thickness in the range of about 20nm to about 5µm.

9. A method of producing a stylus tip including the step of:
providing a stylus tip substrate (20);
characterised by the step of:
forming a first layer (22/28) on the substrate, the first layer having a colour which is visually distinguishable from the colour of the substrate.

10. A method of producing a stylus tip as claimed in claim 9 including the steps of:
forming a further layer (30) on the first layer, the further layer having a surface which is more wear resistant than the first layer.

11. A stylus tip for a measurement contact probe comprising a substrate (20) characterised by having a layer (28/30) formed thereon, the layer having inner (28) and outer (30) portions, the colour of the inner portion being visually distinguishable from the colour of the outer portion.

12. A stylus tip as claimed in claim 11 wherein the layer is formed from a metal and the outer portion of the layer is a chemically treated surface of the metal.

13. A stylus tip as claimed in claim 12 wherein the metal is aluminium and the chemically treated surface is an anodised surface having a colourant.

14. A stylus having a tip as claimed in any one of claims 1-8 or 11-13, or having a tip produced by either of the methods of claims 9 or 10.

15. A probe incorporating the stylus claimed in claim 14.
